# EUROPÄISCHE PATENTANMELDUNG

(11) **EP 1 031 513 A2**
(43) Veröffentlichungstag der Anmeldung: **30.08.2000**
(21) Anmeldenummer: 99124428.6
(22) Anmeldetag: 08.12.1999
(51) Int. Cl.: B65B 59/00

(54) **Vorrichtung zur Beförderung von Gegenständen**

(30) Priorität: 23.02.1999 DE 19907579
(71) Anmelder: TOPACK Verpackungstechnik GmbH, 21493 Schwarzenbek (DE)
(72) Erfinder: Schnabel, Wolfgang, 22113 Oststeinbek (DE)
(74) Vertreter: Eisenführ, Speiser & Partner

(57) **Zusammenfassung**

Die Erfindung betrifft eine Vorrichtung zur Beförderung von Gegenständen (2, 2¹, 2², 2³), insbesondere im wesentlichen quaderförmigen Gebinden oder Verpackungen von Rauchartikeln wie Zigaretten, mit einer ersten Transporteinrichtung (20), die einen Übergabebereich (18), in dem die Gegenstände (2²) an die erste Transporteinrichtung (20) in einer Bewegungsrichtung (A) winklig zur Transportrichtung (B) der ersten Transporteinrichtung (20) übergeben werden, und in Transportrichtung (B) angetriebene Haltemittel (32) aufweist, welche jeweils mit mindestens zwei voneinander beabstandeten Haltelementen (24a, 30) versehen sind, die zwischen sich mindestens einen Gegenstand (2²) aufnehmen und deren Abstand voneinander derart veränderbar ist, daß die Haltelemente (24a, 30) wahlweise eine Transportstellung, in der sie in Anlage an mindestens einen im Übergabebereich (18) in das Haltemittel (32) aufgenommenen Gegenstand (2²) bringbar sind, oder eine geöffnete Stellung einnehmen, in der sie einen größeren Abstand voneinander haben als in der Transportstellung. Das Besondere der Erfindung besteht darin, daß die Haltemittel (32) jeweils mindestens ein Auslöseelement (24b) aufweisen, das vom im Übergabebereich (18) aufzunehmenden Gegenstand (2²) betätigbar ist und dadurch eine Veränderung des Abstandes der Haltelemente (24a, 30) derart bewirkt, daß die Haltelemente (24a, 30) ihre Transportstellung einnehmen.

## Beschreibung

Die Erfindung betrifft eine Vorrichtung zur Beförderung von Gegenständen, insbesondere im wesentlichen quaderförmigen Gebinden oder Verpackungen von Rauchartikeln wie Zigaretten, mit einer ersten Transporteinrichtung, die einen Übergabebereich, in dem die Gegenstände an die erste Transporteinrichtung in einer Bewegungsrichtung winkelig zurTransportrichtung der ersten Transporteinrichtung übergeben werden, und in Transportrichtung angetriebene Haltemittel aufweist, welche jeweils mit mindestens zwei voneinander beabstandeten Haltelementen versehen sind, die zwischen sich mindestens einen Gegenstand aufnehmen und deren Abstand voneinander derart veränderbar ist, daß die Haltelemente wahlweise eine Transportstellung, in der sie in Anlage an mindestens einen im Übergabebereich in das Haltemittel aufgenommenen Gegenstand bringbar sind, oder eine geöffnete Stellung einnehmen, in der sie einen größeren Abstand voneinander haben als in der Transportstellung.

Eine derartige Vorrichtung kommt insbesondere in komplexen Verpackungsanlagen für die Fertigung und Befüllung von Zigaretten-Packungen, bei denen es sich hier um die zuvor erwähnten Gegenstände handelt, zum Einsatz, und zwar für die spielfreie, sogenannte gefesselte Übergabe der Packungen aus einem Revolver in die Taschen eines Kammernbandes.

Es ist allgemein bekannt - beispielsweise aus der DE 43 00 149 A1 und der DE 195 32 092 A1 - die Taschen eines Packungsförderers zum Übergeben von Packungen von einem Förderer zu einem anderen Förderer mit beweglichen Backen zu versehen, die zum Öffnen und Schließen über besondere Steuermittel wie Nockenscheiben und Steuerkurven betätigt werden. Das Öffnen der Backen in eine geöffnete Stellung, in der sie einen größeren Abstand voneinander haben als in der Arbeitsstellung ist deswegen erforderlich, da zum einen ein zielgenaues Einsetzen der Packungen zwischen die Backen einen hohen maschinellen Aufwand erfordert und zum anderen bei der Übergabe von einem Revolver aufgrund der dort teilkreisförmigen Bewegungsbahn eine Kollision der Packungen mit den Backen zu befürchten ist. Somit können die Packungen in der geöffneten Stellung der Backen mit Spiel in die zwischen diesen gebildeten Kammern gelegt werden. Demgegenüber werden die Packungen in der geschlossenen Transportstellung der Backen von diesen fixiert und festgehalten, da die Backen dann an der jeweiligen Packung anliegen.

Bei den herkömmlichen Vorrichtungen besitzen die Steuereinrichtungen zur Bewegung der Backen einen verhältnismäßig komplizierten Aufbau, der nicht nur relativ hohe Herstellungs- und Wartungskosten verursacht, sondern auch nicht immer die erforderliche Betriebszuverlässigkeit gewährleistet. Dies trifft insbesondere auf Steuereinrichtungen zu, die Nockenscheiben, Steuerkurven u.dgl. oder pneumatische oder elektrische Antriebe enthalten. Es besteht daher der Bedarf an einer Vereinfachung einer solchen Steuereinrichtung.

Deshalb schlägt die Erfindung vor, bei einer Vorrichtung der eingangs genannten Art die Haltemittel jeweils mit mindestens einem Auslöseelement zu versehen, das vom im Übergabebereich aufzunehmenden Gegenstand betätigbar ist und dadurch eine Veränderung des Abstandes der Haltelemente derart bewirkt, daß die Haltelemente ihre Transportstellung einnehmen.

Bei der Erfindung wird das Schließen der Haltelemente somit von dem zwischen diesen aufzunehmenden Gegenstand selbst ausgelöst, so daß durch die Übergabe des Gegenstandes in die erste Transporteinrichtung die Haltelemente von ihrer geöffneten Stellung in ihre geschlossene Transportstellung gebracht werden. Die Übergabe der in die Haltemittel aufzunehmenden Gegenstände verursacht also gezielt eine Bewegung der Haltelemente in die Transportstellung, in der sie dann an dem aufgenommenen Gegenstand anliegen und diesen fixieren. Dies wird erfindungsgemäß auf einfache Weise durch ein Auslöseelement erreicht, das mit den Haltelementen gekoppelt ist und bei Betätigung durch den aufzunehmenden Gegenstand eine Schließbewegung der Haltelemente verursacht.

Hierzu ist das Auslöseelement vorzugsweise zwischen einer Ruhestellung und einer Arbeitsstellung bewegbar gelagert und mit dem Gegenstand derart in Eingriff bringbar, daß es vom Gegenstand betätigt und dadurch von seiner Ruhestellung in seine Arbeitsstellung gebracht wird.

Bei einer Weiterbildung dieser Ausführung ist das bewegliche Auslöseelement in seine Ruhestellung federnd vorgespannt, wodurch sich das Auslöseelement im unbetätigten Zustand stets in seiner Ruhestellung befindet und somit im unbetätigten Zustand des Auslöseelementes die Haltelemente ihre geöffnete Stellung einnehmen und für die Aufnahme eines zu befördernden Gegenstandes stets bereit sind. Um nach Eingriff des Gegenstandes mit dem Auslöseelement zu verhindern, daß aufgrund der federnden Vorspannung das Auslöseelement vorzeitig in seine Ruhestellung zurückkehrt und dabei den Gegenstand mitnimmt - dieser Fall könnte insbesondere bei relativ starker Vorspannung der Feder und relativ geringer Masse des Gegenstandes auftreten -, sollte ein Eingriffselement vorgesehen sein, das den Gegenstand in Eingriff mit dem beweglichen Auslöseelement hält, so daß das Auslöseelement in seiner Arbeitsstellung verbleibt. Zweckmäßigerweise ist der Gegenstand bei Übergabe an die erste Transporteinrichtung im Übergabebereich mit dem Eingriffselement in Eingriff bringbar, wobei der Gegenstand in Anlage an das Eingriffselement bringbar sein kann. Vorzugsweise istdas Eingriffselement stationär angeordnet, und zwar in einem solchen Abstand vom Auslöseelement, daß zwischen dem Eingriffselement und dem Auslöseelement ein Raum zur Aufnahme des Gegenstandes derart gebildet wird, daß der Gegenstand sowohl an das Auslöseelement als auch an das Eingriffselement in Anlage bringbar ist. Das Eingriffselement kann als, vorzugsweise schienenförmiges, Führungselement ausgebildet sein, mit dem der Gegenstand während des Transportes durch die erste Transporteinrichtung in Gleitanlage bringbar ist.

Bei einer weiteren bevorzugten Ausführung, bei welcher ein Haltelement gegenüber dem anderen Haltelement des Haltemittels beweglich gelagert ist, ist das Auslöseelement mit dem beweglichen Haltelement mechanisch gekoppelt. Diese Ausführung bietet eine besonders einfache Konstruktion, da die Betätigung des Auslöseelementes durch den aufzunehmenden Gegenstand über die mechanische Kopplung unmittelbar eine Bewegung des beweglichen Haltelementes in die Transportstellung bewirkt.

An dieser Stelle sei der Vollständigkeit halber angemerkt, daß jedes Haltemittel mindestens zwei Haltelemente aufweisen muß, die zwischen sich den zu transportierenden Gegenstand aufnehmen, und daß nicht nur das eine dieser beiden Haltelemente, sondern zusätzlich auch das andere Haltelement bewegbar gelagert sein kann.

Das bewegliche Haltelement kann schwenkbar gelagert sein, wodurch auf besonders einfache Weise eine bewegliche Lagerung realisiert werden kann. Zweckmäßigerweise kann dabei das Auslöselement mit dem beweglichen Haltelement starr verbunden sein, so daß eine Bewegung des Auslöseelementes durch den aufzunehmenden Gegenstand unmittelbar auch eine Bewegung des bzw. der beweglichen Haltelemente in die Transportstellung bewirkt. Bei dieser Weiterbildung wird die Steuerung der Bewegung des bzw. der Haltelemente auf konstruktiv ganz besonders einfache Weise realisiert, da das bewegliche Haltelement aufgrund der starren mechanischen Verbindung vom Auslöseelement bei Betätigung durch den Gegenstand einfach mitgenommen wird.

Eine weitere gegenwärtig besonders bevorzugte Weiterbildung zeichnet sich dadurch aus, daß die Haltemittel jeweils mindestens einen um eine Schwenkachse schwenkbar gelagerten Winkelhebel aufweisen, dessen beide Schenkel in einem Winkel zur Schwenkachse angeordnet sind, von denen der eine Schenkel das bewegliche Haltelement und der andere Schenkel das Auslöseelement bildet. Diese Ausführung bietet eine konstruktiv äußerst einfache Steuerung der Bewegung des Haltelementes in die Schließstellung, da die Schwenkbewegung des Auslöseelementes von seiner Ruhestellung in seine Arbeitsstellung aufgrund der Betätigung durch den aufzunehmenden Gegenstand in gleicher Weise eine Schwenkbewegung des Haltelementes von seiner geöffneten in seine geschlossene Transportstellung zur Folge hat. Beim Einsetzen in das Haltemittel übt der Gegenstand eine Drehbewegung auf den Winkelhebel aus, indem er mit dem das Auslöseelement bildenden Schenkel des Winkelhebels in Berührung oder Eingriff gelangt und bei fortgesetzter Übergabebewegung diesen in seine Arbeitsstellung verschwenkt, wodurch der das bewegliche Haltelement bildende andere Schenkel des Winkelhebels in Richtung auf den Gegenstand verschwenkt und dabei in Anlage an diesen gebracht wird.

Zweckmäßigerweise sollte die Schwenkachse etwa horizontal und/oder etwa rechtwinkelig zur Transportrichtung der ersten Transporteinrichtung verlaufen.

Insbesondere wenn die zu befördernden Gegenstände die Form eines Quaders besitzen, sollten die beiden Schenkel des Winkelhebels und insbesondere deren mit dem Gegenstand in Anlage bringbare Anlageflächen etwa rechtwinkelig zueinander angeordnet sein, wodurch nicht nur der als Haltelement dienende Schenkel, sondern auch der als Auslöseelement dienende Schenkel den Gegenstand im Haltemittel arretiert, wenn dieser nach Übergabe von der ersten Transporteinrichtung weiter befördert wird.

Ferner können die Haltelemente in ihrer Arbeitsstellung etwa parallel zueinander und/oder etwa vertikal zur Transportrichtung ausgerichtet sein, was ebenfalls besonders vorteilhaft für eine sichere Arretierung von quaderförmigen Gegenständen ist. Dabei sollten die mit dem Gegenstand in Anlage bringbaren Anlageflächen der Haltelemente im wesentlichen eben sein und in der Arbeitsstellung der Haltelemente etwa parallel zueinander und/oder etwa vertikal zurTransportrichtung verlaufen.

Vorzugsweise liegt der zu befördernde Gegenstand im Haltemittel auf dem das Auslöseelement bildenden einen Schenkel des Winkelhebels auf, so daß dieser zum einen als Stütze für den zu befördernden Gegenstand dient und zum anderen durch dessen Gewicht beaufschlagt wird, wodurch automatisch der als Haltelement dienende andere Schenkel des Winkelelementes in Anlage an einen seitlichen Abschnitt des Gegenstandes gedrückt wird.

Eine ebenfalls gegenwärtig besonders bevorzugte Weiterbildung der zuvor beschriebenen Anordnung, bei welcher die Gegenstände auf einer gekrümmten, insbesondere teilkreisförmigen Bahn in den Übergabebereich der ersten Transporteinrichtung gelangen, zeichnet sich dadurch aus, daß die Schwenkachse des Winkelhebels etwa rechtwinkelig zu der von der gekrümmten Bahn aufgespannten Ebene verläuft. Hierbei ist üblicherweise eine zweite Transporteinrichtung vorgesehen, die die Gegenstände auf der gekrümmten Bahn zum Übergabebereich der ersten Transporteinrichtung befördert und vorzugsweise als Revolver ausgebildet ist.

Schließlich sei noch erwähnt, daß die erste Transporteinrichtung ein Kammernband aufweisen kann, dessen Laufrichtung die Transportrichtung darstellt, wobei jeweils zwischen mindestens zwei voneinander beabstandeten Haltelementen eines Haltemittels eine Kammer bzw. Tasche zur Aufnahme mindestens eines Gegenstandes gebildet ist.

Nachfolgend wird ein bevorzugtes Ausführungsbeispiel der Erfindung anhand der beiliegenden Figuren näher erläutert. Es zeigen:
- Figur 1: eine schematische, teilweise geschnittene Seitenansicht einer bevorzugten Ausführung der erfindungsgemäßen Vorrichtung;
- Figur 2: eine Draufsicht auf die Ausführung von Figur 1; und
- Figur 3 a bis c: in vergrößerter schematischer Seitenansicht die Übergabe einer Packung von einem Revolver auf ein Kammernband in einem Übergabebereich der Vorrichtung.

Die in den Figuren dargestellte und nachfolgend beschriebene Vorrichtung dient zur Beförderung von quaderförmigen Gebinden bzw. Packungen 2, bei denen es sich insbesondere um Zigarettenpackungen bzw. sogenannten "Stangen" handelt, so daß die dargestellte Vorrichtung insbesondere in Verpackungsanlagen für die Fertigung von Zigaretten-Packungen zum Einsatz kommt.

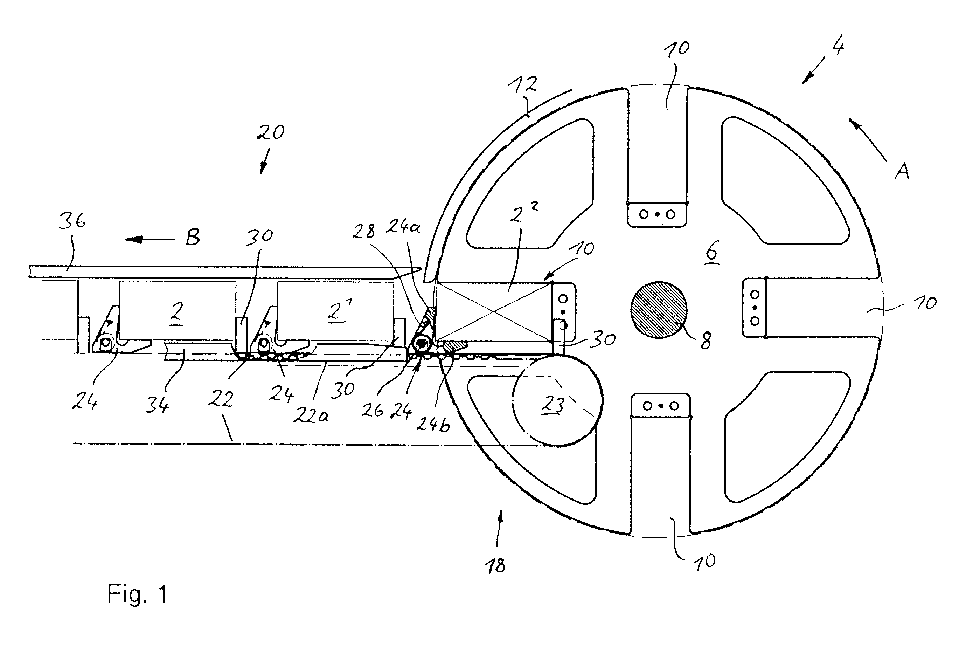

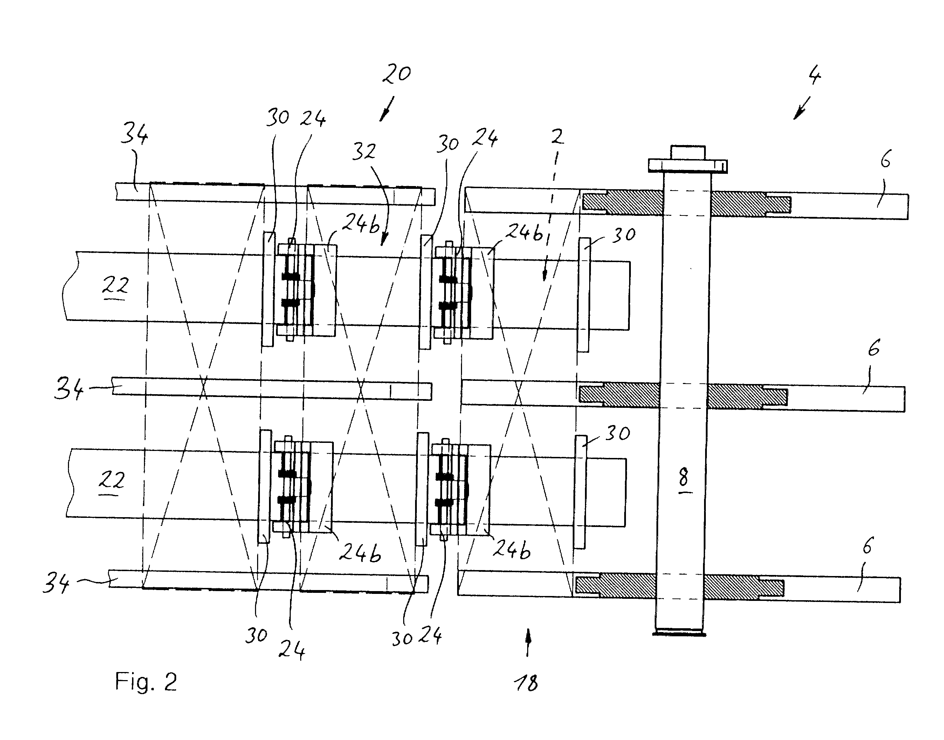

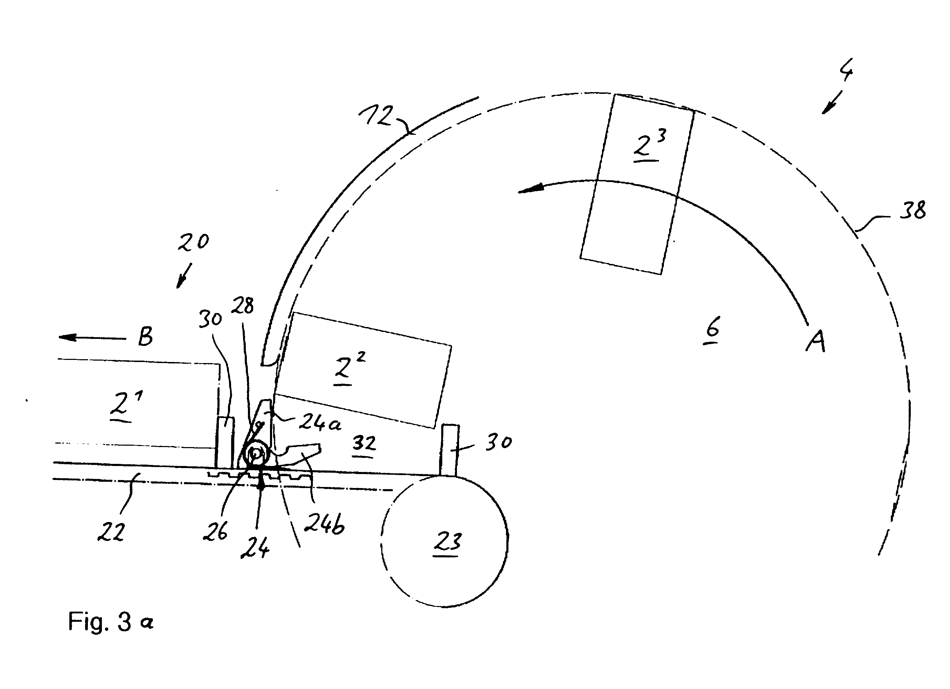

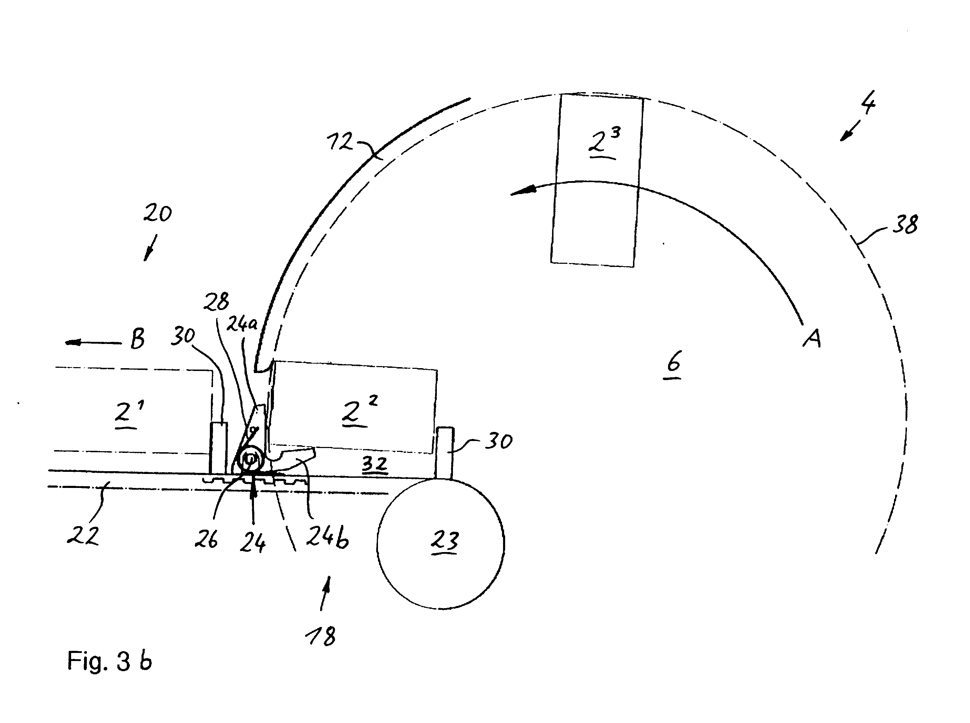

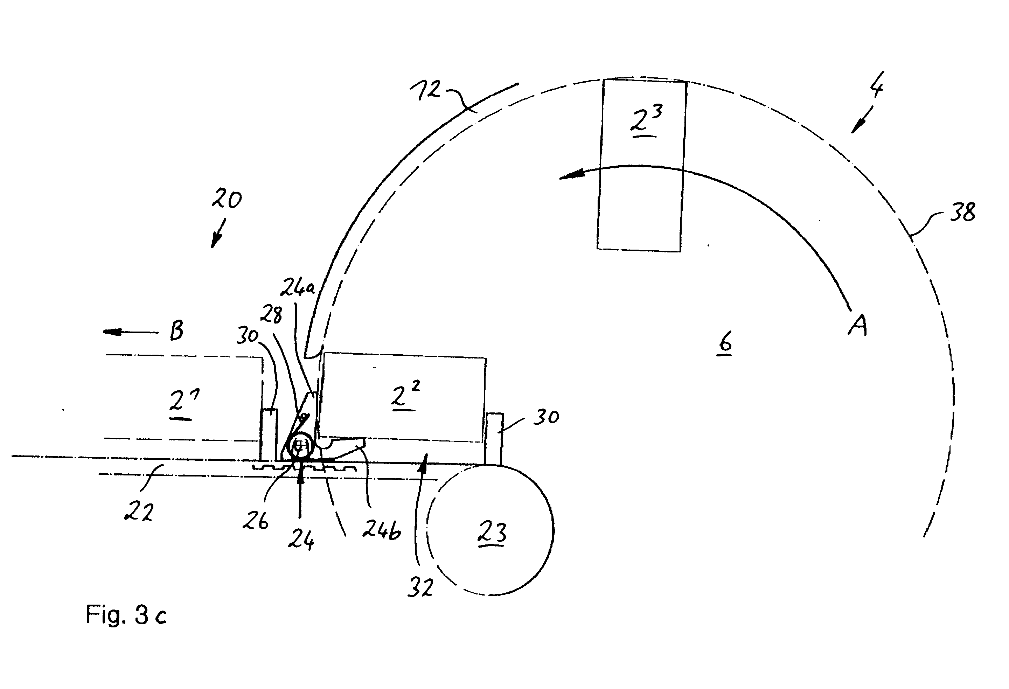

Wie insbesondere die Figuren 1 und 2 erkennen lassen, weist die dargestellte Vorrichtung einen Übergaberevolver 4 auf, der drei voneinander beabstandete Revolverscheiben 6 enthält. Diese Revolverscheiben 6 sind koaxial auf einer gemeinsamen drehbar gelagerten Drehachse 8 angeordnet. Wie Figur 1 erkennen läßt, sind die Revolverscheiben 6 jeweils mit vier im Winkelabstand von 90° zueinander angeordneten Aussparungen 10 versehen, die im Querschnitt - in axialer Richtung betrachtet - die Form eines Rechteckes besitzen, sich radial in bezug auf die Drehachse 8 erstrecken und zum Umfang der Revolverscheiben 6 offen sind. Diese Aussparungen 10 dienen als Kammern zur Aufnahme jeweils einer Packung wie beispielsweise der in Figuren 1 und 3a bis c gezeigten Packung 2² und der in den Figuren 3a bis c gezeigten Packung 2³, und zwar durch leichten Klemmeingriff, wozu die Rechteckquerschnittsform der Aussparung 10 der Rechteckquerschnittsform der Packungen entsprechend angepaßt ist. Dabei werden die Packungen über die offene Seite der Aussparungen 10 in diese eingesetzt und aus diesen entnommen. Wie Figur 1 erkennen läßt, ist in der dargestellten Ausführung die Rechteckform der Aussparung 10 so ausgerichtet, daß deren Langseite radial angeordnet ist. Selbstverständlich sind die drei Revolverscheiben 6 hinsichtlich der Aussparungen 10 zueinander ausgerichtet, so daß die Aussparungen 10 von Revolverscheibe 6 zu Revolverscheibe 6 parallel angeordnet sind. Somit werden bei der dargestellten Ausführung vier Gruppen mit jeweils drei zueinander fluchtenden Aussparungen 10 gebildet, von denen die erste Aussparung 10 in der ersten Revolverscheibe 6, die zweite Aussparung 10 in der zweiten Revolverscheibe 6 und die dritte Aussparung 10 in der dritten Revolverscheibe 6 vorgesehen ist. Jede der aus drei Aussparungen 10 bestehenden vier Gruppen von Aussparungen bildet eine Aufnahme für eine Packung, die mit ihrer Langseite in axialer Richtung, d.h. in Richtung der Längserstreckung der Drehachse 8, liegt, wie in Figur 2 durch gestrichelte Linien und das zugeordnete Bezugszeichen 2² angedeutet ist.

Entlang eines Umfanges der Revolverscheiben 6 sind diese mit einem entsprechend gekrümmten Führungsblech 12 überdeckt, das stationär angeordnet ist und einen minimalen Abstand zum Umfang der Revolverscheiben 6 aufweist, damit sich diese frei drehen können. In Figur 2 ist aus Gründen der besseren Übersicht das gekrümmte Führungsblech 12 weggelassen.

Neben dem Übergaberevolver 4 weist die dargestellte Vorrichtung einen Bandförderer 20 auf, der im Übergabebereich 18 die Packungen 2 nacheinander vom Übergaberevolver 4 übernimmt. Während der Übergaberevolver 4 die Packungen 2 auf einer teilkreisförmigen Bahn gemäß Pfeil A - in den Figuren 1 und 3a bis c entgegengesetzt dem Uhrzeigersinn - bewegt, transportiert der Bandförderer 20 die vom Übergaberevolver 4 übernommenen Packungen 2 in linearer Richtung gemäß Pfeil B weiter - in den dargestellten Figuren nach links.

Der Bandförderer 20 weist zwei voneinander beabstandete endlose Zahnriemen 22 auf, die von einem nicht dargestellten Motor angetrieben werden und um jeweils zwei Umlenkrollen geführt sind, von denen in Figur 1 die im Übergabebereich 18 angeordnete Umlenkrolle 23 dargestellt ist. Die beiden Zahnriemen 22 erstrecken sich mit ihrem einen in den Figuren dargestellten Ende, wo sie um die Umlenkrollen 23 umgelenkt werden, in den Übergaberevolver 4, wobei jeweils ein Zahnriemen 22 zwischen zwei der drei Revolverscheiben 6, also der eine Zahnriemen 22 zwischen der mittleren Revolverscheibe 6 und der einen äußeren Revolverscheibe 6 und der andere Zahnriemen 22 zwischen der mittleren Revolverscheibe 6 und der anderen äußeren Revolverscheibe 6 angeordnet ist, und zwar jeweils in einem Abstand zu den Revolverscheiben 6, um die Bewegung der Revolverscheiben 6 nicht zu behindern, wie Figur 2 erkennen läßt.

Auf der Außenseite der Zahnriemen 22 sind in dessen Längsrichtung gemäß Pfeil B im Abstand voneinander Klappen bzw. Winkelhebel 24 vorgesehen, die aus zwei rechtwinklig zueinander angeordneten Schenkeln 24a und 24b bestehen. Der erste Schenkel 24a steht im wesentlichen aufrecht, während sich der zweite Schenkel 24b im wesentlichen entgegen der Transportrichtung des oberen Troms 22a des Zahnriemens 22 gemäß Pfeil B erstreckt, wie insbesondere die Figuren 1 und 3 erkennen lassen.

Die Winkelhebel 24 sind um eine Drehachse 26 schwenkbar gelagert, welche sich parallel zur Oberfläche des Zahnriemens 22, jedoch quer zu dessen Laufrichtung gemäß Pfeil B erstreckt. Ferner ist an jedem Winkelhebel 24 eine Feder 28 vorgesehen, die den Winkelhebel in die in Figur 3a gezeigte Schwenkstellung vorspannt; bei der in der dargestellten Ausführung verwendeten Feder 28 handelt es sich um eine Spiralfeder, die mit mehreren Windungen um die Drehachse 26 geführt und mit ihrem einen Ende am ersten Schenkel 24a des Winkelhebels 24 und mit ihrem anderen Ende am Zahnriemen 22 befestigt ist.

Jedem Winkelhebel 24 ist ein Nocken 30 zugeordnet, der auf der Außenseite des Zahnriemens 22 stationär befestigt und als plattenförmiges Element ausgebildet ist, das auf der Oberfläche des Zahnriemens 22 aufrecht, also gegenüber dieser rechtwinklig, steht und sich quer zur Laufrichtung des Zahnriemens 22 gemäß Pfeil B erstreckt. Zwischen diesem Nocken 30 und dem zugehörigen Winkelhebel 24 wird jeweils eine Kammer bzw. Tasche gebildet, die in Figur 2 mit dem Bezugszeichen 32 angedeutet ist und zur Aufnahme jeweils einer Packung 2, 2¹ bzw. 2² dient, wie Figur 1 erkennen läßt. Dabei wird jede dieser Taschen 32 zum einen von den einander zugewandten Innenflächen des ersten Schenkels 24a des Winkelhebels 24 und des Nockens 30 und zum anderen an ihrer Unterseite vom zweiten Schenkel 24b des Winkelhebels 24 begrenzt, welcher sich in Richtung auf den Nocken 30 erstreckt.

Aus Gründen einer besseren Übersicht ist in Figur 3 die Anordnung der Winkelhebel 24 und der Nocken 30 nur auf dem oberen Trum 22a dargestellt. Tatsächlich ist jedoch diese Anordnung über die gesamte Länge des umlaufenden endlosen Zahnriemens 22 vorgesehen.

Ferner weist der Bandförderer 20 untere Führungsschienen 32 auf, die sich in Flucht zu den Revolverscheiben 6 in Laufrichtung des Zahnriemens 22 gemäß Pfeil B erstrecken, jedoch in einem Abstand zu den Revolverscheiben 6 enden, um nicht mit diesen zu kollidieren, wie in Figur 2 gezeigt ist. Außerdem liegen die unteren Führungsschienen 34 auf der Höhe der zweiten Schenkel 24b der Winkelhebel 24, wie Figur 1 erkennen läßt. Somit werden die zwischen den Winkelhebeln 24 und den zugehörigen Nocken 30 gebildeten Taschen 32 an ihrer Unterseite zusätzlich noch von diesen unteren Führungsschienen 34 begrenzt.

Schließlich weist der Bandförderer 20 noch obere Führungselemente 36 auf, die die zwischen den Winkelhebeln 24 und den zugehörigen Nocken 30 gebildeten Taschen 32 in ihrer Höhe entsprechend der Höhe der zu transportierenden Packungen 2, 2¹, 2² usw. begrenzt, wie Figur 1 ebenfalls erkennen läßt. In Figur 2 sind diese oberen Führungselemente 36 aus Gründen einer besseren Übersicht weggelassen. Vorzugsweise sind die oberen Führungselemente 36 ebenfalls als Führungsschienen ausgebildet, die sich parallel zu den unteren Führungsschienen 34 erstrecken und in einem Abstand entsprechend der Höhe der zu transportierenden Packungen 2 angeordnet sind.

Wie Figur 1 ferner erkennen läßt, enden die unteren Führungsschienen 34 und die oberen Führungselemente 36 kurz vor den Revolverscheiben 6 des Übergaberevolvers 4, während das gekrümmte Führungsblech 12 in der dargestellten Ausführung etwa auf der Höhe der oberen Führungselemente 36 endet, um eine Kollision mit den aus dem Übergaberevolver 4 zu entnehmenden und mit dem Bandförderer 20 weiterzutransportierenden Packungen 2, 2¹, 2² zu vermeiden.

Nachfolgend wird der Betrieb der zuvor beschriebenen Vorrichtung und insbesondere die Übergabe der Packungen 2 vom Übergaberevolver 4 auf den Bandförderer 20 im Übergabebereich 18 erläutert.

Die Drehachse 8 des Übergaberevolvers 4 wird von einer nicht dargestellten Einrichtung in Winkelschritten von 90° in Richtung des Pfeils A drehend angetrieben, so daß die darauf sitzenden Revolverscheiben 6 ebenfalls entsprechend in Winkelschritten von 90° gedreht werden. Ferner wird der Zahnriemen 22 schrittweise in Richtung des Pfeils B angetrieben, und zwar in Schritten entsprechend dem Abstand der Nocken 30 bzw. Winkelhebel 24 voneinander. Dabei werden die Drehbewegung der Revolverscheiben 6 des Übergaberevolvers 4 und der Antrieb des Zahnriemens 22 des Bandförderers 20 durch eine nicht dargestellte Steuereinrichtung derart miteinander koordiniert, daß im Übergabebereich 18 stets eine Gruppe der Aussparungen 10 des Übergaberevolvers 4 mit einer zwischen einem Winkelhebel 24 und dem zugehörigen Nocken 30 gebildeten Tasche 32 fluchtet, so daß die in diesen Aussparungen 10 sitzende Packung 2 vom Bandförderer 20 aus dem Übergaberevolver 4 herausgenommen werden kann. Üblicherweise werden die Packungen 2 in den Übergaberevolver 4 an der vom Übergabebereich 18 in einem Winkelabstand von 180° entfernt liegenden Stelle von einer nicht dargestellten Komponente der Verpackungsanlage eingesetzt.

Die Übergabe vom Übergaberevolver 4 auf den Bandförderer 20 ist in den Figuren 3a bis c im einzelnen dargestellt. Dabei ist die bereits an den Bandförderer 20 übergebene und um einen Teilungsschritt fortbewegte Packung mit 2¹, die anschließende, noch im Übergaberevolver 4 befindliche und als nächste auf den Bandförderer 20 zu übergebende Packung mit 2² und die darauffolgende noch vom Übergaberevolver 4 beförderte Packung mit 2³ bezeichnet.

Wenn sich die Packung 2² durch fortgesetzte Rotation der Revolverscheiben 6 des Übergaberevolvers 4 dem Übergabebereich 18 nähert, ist der Zahnriemen 22 des Bandförderers 20 bereits zuvor soweit angetrieben und anschließend angehalten worden, daß sich die der Tasche mit der bereits darin enthaltenen Packung 2¹ anschließende und noch unbesetzte Tasche 32 exakt im Übergabebereich 18 befindet, um die nachfolgende Packung 2² aufnehmen zu können.

Wie bereits zuvor erwähnt wurde, ist der Winkelhebel 24 schwenkbar gelagert. Dabei wird der Winkelhebel 24 von der Feder 28 in eine geöffnete Stellung vorgespannt, wie sie in den Figuren 3a und b gezeigt ist. Definiert wird diese geöffnete Stellung von einem in den Figuren nicht näher dargestellten Anschlag, gegen den der Winkelhebel 24 durch den Einfluß der Feder 28 vorgespannt wird. Dabei ist der Anschlag und somit die geöffnete Stellung des Winkelhebels 24 so eingestellt, daß sich der erste Schenkel 24a außerhalb einer teilkreisförmigen Linie 38 befindet, die von demjenigen Teil der in die Revolverscheibe 6 eingesetzten Packungen 2², 2³ beschrieben wird, welcher den größten radialen Abstand zur Drehachse 8 der Revolverscheiben 6 hat. Wenn - wie im dargestellten und vorliegend beschriebenen Ausführungsbeispiel - die Aussparungen 10 in den Revolverscheiben 6 eine solche radiale Tiefe besitzen, daß die dort eingesetzten Packungen 2², 2³ nicht über den Umfang der Revolverscheiben 6 hinausragen, fällt die in Figur 3a bis c gestrichelt dargestellte teilkreisförmige Linie 38 mit dem Umfang der Revolverscheiben 6 zusammen. Demnach wird eine Kollision der in die Tasche 32 aufzunehmenden Packung 2² mit dem ersten Schenkel 24a des Winkelhebels 24 verhindert, wenn sich dieser in seiner geöffneten Stellung gemäß den Figuren 3a und 3b befindet. Andererseits muß der gegenüberliegende und die Tasche 32 auf der anderen Seite begrenzende Nocken 30 ebenfalls so angeordnet sein, daß die Packung 2² auch mit dem Nocken 30 nicht kollidiert, wie Figur 3a erkennen läßt.

In der geöffneten Stellung des Winkelhebels 24 ist ferner dessen zweiter Schenkel 24b ein wenig aus der Horizontalen angehoben, wie die Figuren 3a und b erkennen lassen. Dabei liegt der zweite Schenkel 24b deutlich oberhalb der von der Oberfläche der unteren Führungsschienen 34 aufgespannten Ebene.

In die so geöffnete Tasche 32 wird mit fortgesetzter Drehbewegung der Revolverscheiben 6 des Übergaberevolvers 4 in Richtung des Pfeils A die Packung 2² allmählich eingeführt. Dabei gelangt die Packung 2² mit ihrer Unterseite in Anlage an den angehobenen zweiten Schenkel 24b des sich noch in der geöffneten Stellung befindlichen Winkelhebels 24. Diese Stellung ist in Figur 3b gezeigt, in der die Packung 2² nur noch um etwa 2° gegenüber der Horizontalen 'angehoben' ist.

Bei fortgesetzter Schwenkbewegung der Revolverscheiben 6 des Übergaberevolvers 4 drückt die Packung 2² mit ihrer Unterseite den daran anliegenden zweiten Schenkel 24b nach unten in Richtung auf den Zahnriemen 22. Somit wird der zweite Schenkel 24b des Winkelhebels 24 von der Packung 2² gegen die Vorspannung der Feder 28 allmählich in die Horizontale verschwenkt, was gleichzeitig zur Folge hat, daß der erste Schenkel 24a des Winkelhebels 24 in Richtung auf die ihm zugewandte Seitenfläche der Packung 2² verschwenkt wird, wie ein Vergleich der Figur 3c mit der Figur 3b erkennen läßt.

Somit wird durch die Packung 2² der Winkelhebel 24 aus seiner geöffneten Stellung gemäß den Figuren 3a und b in eine geschlossene Transportstellung verschwenkt, in der er mit seinen beiden Schenkeln 24a und 24b an der ihm zugewandten Seite sowie an der Unterseite der Packung 2² anliegt und somit an dieser Stelle die Packung 2 umgreift, wie Figur 1 erkennen läßt. Die die Packung aufnehmende Tasche 32 ist nun geschlossen. Wie ein Vergleich von Figur 1 mit den Figuren 3a und b zeigt, ist in der Transportstellung des Winkelhebels 24 gemäß Figur 1 der Abstand zwischen dessen erstem Schenkel 24a und dem zugehörigen Nocken 30 kleiner als in der geöffneten Stellung gemäß den Figuren 3a und b, in der sich der Abstand zumindest nach oben hin vergrößert.

Die Aussparungen 10 in den Revolverscheiben 6, in der die Packung 2² gemäß den Figuren noch sitzt, fluchten im Übergabebereich 18 mit dem von den oberen Führungselementen 36 und den unteren Führungsschienen 34 begrenzten Transportraum in Richtung des Pfeils B. Der Antrieb des Bandförderers 20 kann nun wieder eingeschaltet werden, was zur Folge hat, daß die in der Tasche 32 zwischen dem Winkelhebel 24 und dem Nocken 30 aufgenommene Packung 2² aus den Aussparungen 10 der Revolverscheiben 6 herausgezogen und somit vom Übergaberevolver 4 in dem Bandförderer 20 übergeben wird. Dabei wird die Packung 2² gleichzeitig in Gleitanlage sowohl an die unteren Führungsschienen 34 als auch an die oberen Führungselemente 36 gebracht, da der dazwischen gebildete Raum eine Höhe entsprechend der Höhe der zu transportierenden Packungen 2 besitzt. Die Gleitanlage der Packungen 2 an den oberen Führungselementen 36 hat außerdem die Wirkung, daß eine Rückkehr des Winkelhebels 24 aufgrund der Vorspannung der Feder 28 in seine Ruhestellung verhindert wird. Die oberen Führungselemente 36 dienen somit als Niederhalter, indem sie die Packungen 2 in Anlage an den unteren zweiten Schenkel 24b des Winkelhebels 24 halten, wodurch der Winkelhebel 24 gegen die Kraft der Feder 28 in seiner Arbeitsstellung gemäß Figur 1 verbleibt.

Wie insbesondere Figur 1 erkennen läßt, dienen der aufrechte erste Schenkel 24a des Winkelhebels 24 und der zugeordnete Nocken 30 als Haltelemente zur Fixierung der Packung 2 in Transportrichtung gemäß Pfeil B. Wie sich insbesondere der vorangegangenen Beschreibung entnehmen läßt, dient der zweite Schenkel 24b des Winkelhebels 24 als Auslöseelement, da die starre Verbindung mit dem ersten Schenkel 24a dessen Mitnahme bewirkt, wenn der zweite Schenkel 24b von der Packung 2² verschwenkt wird. Ferner dient der zweite Schenkel 24b zusätzlich als Stütze für die in der zugehörigen Tasche 32 befindliche Packung, die im übrigen aber auch auf den unteren Führungsschienen 34 aufliegen kann.

Um eine im wesentlichen flächige Anlage an die in diesem Ausführungsbeispiel verwendeten quaderförmigen Packungen 2 herzustellen, sollten die der Packung zugewandten Anlageflächen vorzugsweise eben und so angeordnet sein, daß in der geschlossenen Stellung des Winkelhebels 24 dessen beiden Schenkel 24a und 24b im wesentlichen flächig an den entsprechenden Abschnitten der Packung 2 anliegen. Zumindest sollte dies für den zweiten Schenkel 24b zutreffen, auf den in der beschriebenen Ausführung die Packung während des Transportes im Bandförderer 20 aufliegt. Somit verlaufen in der Transportstellung gemäß Figur 1 die als Anlageflächen dienenden Innenseiten des ersten Schenkels 24a des Winkelhebels 24 und des Nockens 30 im wesentlichen vertikal und parallel zueinander, während die die Unterseite der Packung 2² aufnehmende Anlage- bzw. Auflagefläche des zweiten Schenkels 24b des Winkelhebels 24 in dessen Transportstellung horizontal ausgerichtet ist.

Wenn die Packungen nacheinander aus dem Bandförderer 20 entnommen werden, bewirkt die durch die Feder 28 erzeugte Vorspannung, daß die Winkelhebel 24 wieder ihre geöffnete Stellung gemäß den Figuren 3a und b einnehmen, so daß die so entleerten Taschen 32 wieder geöffnet werden und nach Umlauf über den unteren rückwärtigen Trum zur Aufnahme von neuen Packungen im Übergabebereich 18 bereit sind.

## Patentansprüche

1. Vorrichtung zur Beförderung von Gegenständen (2, 2¹, 2², 2³), insbesondere im wesentlichen quaderförmigen Gebinden oder Verpackungen von Rauchartikeln wie Zigaretten, mit einer ersten Transporteinrichtung (20), die einen Übergabebereich (18), in dem die Gegenstände (2²) an die erste Transporteinrichtung (20) in einer Bewegungsrichtung (A) winklig zur Transportrichtung (B) der ersten Transporteinrichtung (20) übergeben werden, und in Transportrichtung (B) angetriebene Haltemittel (32) aufweist, welche jeweils mit mindestens zwei voneinander beabstandeten Haltelementen (24a, 30) versehen sind, die zwischen sich mindestens einen Gegenstand (2²) aufnehmen und deren Abstand voneinander derart veränderbar ist, daß die Haltelemente (24a, 30) wahlweise eine Transportstellung, in der sie in Anlage an mindestens einen im Übergabebereich (18) in das Haltemittel (32) aufgenommenen Gegenstand (2²) bringbar sind, oder eine geöffnete Stellung einnehmen, in der sie einen größeren Abstand voneinander haben als in der Transportstellung,
dadurch gekennzeichnet, daß die Haltemittel (32) jeweils mindestens ein Auslöseelement (24b) aufweisen, das vom im Übergabebereich (18) aufzunehmenden Gegenstand (2²) betätigbar ist und dadurch eine Veränderung des Abstandes der Haltelemente (24a, 30) derart bewirkt, daß die Haltelemente (24a, 30) ihre Transportstellung einnehmen.

2. Vorrichtung nach Anspruch 1,
dadurch gekennzeichnet, daß das Auslöseelement (24b) zwischen einer Ruhestellung und einer Arbeitsstellung bewegbar gelagert und mit dem Gegenstand (2²) derart in Eingriff bringbar ist, daß es vom Gegenstand (2²) betätigt und dadurch von seiner Ruhestellung in seine Arbeitsstellung gebracht wird.

3. Vorrichtung nach Anspruch 2,
dadurch gekennzeichnet, daß das bewegliche Auslöseelement (24b) in seine Ruhestellung federnd (28) vorgespannt ist.

4. Vorrichtung nach Anspruch 3,
gekennzeichnet durch ein Eingriffselement (36), das den Gegenstand (2, 2¹) in Eingriff mit dem beweglichen Auslöseelement (24b) hält, so daß das Auslöseelement (24b) in seiner Arbeitsstellung verbleibt.

5. Vorrichtung nach Anspruch 4,
dadurch gekennzeichnet, daß der Gegenstand (2²) bei Übergabe an die erste Transporteinrichtung (20) im Übergabebereich (18) mit dem Eingriffselement (36) in Eingriff bringbar ist.

6. Vorrichtung nach Anspruch 5,
dadurch gekennzeichnet, daß der Gegenstand (2²) in Anlage an das Eingriffselement (36) bringbar ist.

7. Vorrichtung nach mindestens einem der Ansprüche 4 bis 6,
dadurch gekennzeichnet, daß das Eingriffselement (36) stationär angeordnet ist.

8. Vorrichtung nach den Ansprüchen 6 und 7,
dadurch gekennzeichnet, daß das Eingriffselement (36) in einem solchen Abstand vom Auslöseelement (24b) angeordnet ist, daß zwischen dem Eingriffselement (36) und dem Auslöseelement (24b) ein Raum (32) zur Aufnahme des Gegenstandes (2, 2¹) derart gebildet wird, daß der Gegenstand (2, 2¹) sowohl an das Auslöseelement (24b) als auch an das Eingriffselement (36) in Anlage bringbar ist.

9. Vorrichtung nach den Ansprüche 7 und 8,
dadurch gekennzeichnet, daß das Eingriffselement (36) als, vorzugsweise schienenförmiges, Führungselement ausgebildet ist, mit dem der Gegenstand (2, 2¹) während des Transportes durch die erste Transporteinrichtung (20) in Gleitanlage bringbar ist.

10. Vorrichtung nach mindestens einem der Ansprüche 1 bis 9,
bei welcher ein Haltelement (24a) gegenüber dem anderen Haltelement (30) beweglich gelagert ist,
dadurch gekennzeichnet, daß das Auslöseelement (24b) mit dem beweglichen Haltelement (24a) mechanisch gekoppelt ist.

11. Vorrichtung nach Anspruch 10,
dadurch gekennzeichnet, daß das bewegliche Haltelement (24a) schwenkbar gelagert ist.

12. Vorrichtung nach Anspruch 10 oder 11,
dadurch gekennzeichnet, daß das Auslöseelement (24b) mit dem beweglichen Haltelement (24a) starr verbunden ist.

13. Vorrichtung nach Anspruch 12,
dadurch gekennzeichnet, daß die Haltemittel (32) jeweils mindestens einen um eine Schwenkachse (26) schwenkbar gelagerten Winkelhebel (24) aufweisen, dessen beide Schenkel (24a, 24b) in einem Winkel zur Schwenkachse (26) angeordnet sind, von denen der eine Schenkel (24a) das bewegliche Haltelement (24a) und der andere Schenkel (24b) das Auslöseelement (24b) bildet.

14. Vorrichtung nach Anspruch 13,
dadurch gekennzeichnet, daß die Schwenkachse (26) etwa horizontal und/oder etwa rechtwinklig zur Transportrichtung (B) der ersten Transporteinrichtung (20) verläuft.

15. Vorrichtung nach Anspruch 13 oder 14,
dadurch gekennzeichnet, daß die beiden Schenkel (24a, 24b) und insbesondere deren mit dem Gegenstand (2²) in Anlage bringbare Anlageflächen etwa rechtwinklig zueinander angeordnet sind.

16. Vorrichtung nach mindestens einem der Ansprüche 13 bis 15,
dadurch gekennzeichnet, daß die Haltelemente (24a, 30) in ihrer Schließstellung etwa parallel zueinander und/oder etwa vertikal zur Transportrichtung (B) ausgerichtet sind.

17. Vorrichtung nach Anspruch 16,
dadurch gekennzeichnet, daß die mit dem Gegenstand (2²) in Anlage bringbaren Anlageflächen der Haltelemente (24a, 30) im wesentlichen eben sind und in der Transportstellung der Haltelemente (24a, 30) etwa parallel zueinander und/oder etwa vertikal zur Transportrichtung verlaufen.

18. Vorrichtung nach mindestens einem der Ansprüche 13 bis 17,
bei welcher die Gegenstände (2², 2³) auf einer gekrümmten, insbesondere teilkreisförmigen Bahn (38, A) in den Übergabebereich (18) der ersten Transporteinrichtung (20) gelangen,
dadurch gekennzeichnet, daß die Schwenkachse (26) des Winkelhebels (24) etwa rechtwinklig zu der von der gekrümmten Bahn (38, A) aufgespannten Ebene verläuft.

19. Vorrichtung nach Anspruch 18,
gekennzeichnet durch eine zweite Transporteinrichtung (4), die die Gegenstände (2², 2³) auf der gekrümmten Bahn (38, A) zum Übergabebereich (18) der ersten Transporteinrichtung (20) befördert und vorzugsweise als Revolver ausgebildet ist.

20. Vorrichtung nach mindestens einem der Ansprüche 1 bis 19,
dadurch gekennzeichnet, daßdie ersteTransporteinrichtung ein Kammernband (22) aufweist, dessen Laufrichtung (B) die Transportrichtung (B) darstellt, wobei jeweils zwischen mindestens zwei voneinander beabstandeten Haltelementen (24a, 30) eines Haltemittels (32) eine Kammer (32) zur Aufnahme mindestens eines Gegenstandes (2, 2¹, 2²) gebildet ist.
